# EUROPÄISCHE PATENTSCHRIFT

(11) **EP 1 330 013 B1**
(45) Veröffentlichungstag und Bekanntmachung des Hinweises auf die Patenterteilung: **02.05.2012**
(21) Anmeldenummer: 02001494.0
(22) Anmeldetag: 22.01.2002
(51) Int. Cl.: H02K 7/06, H02K 7/116, F16H 25/24

(54) **Linearer Spindel-Verstellantrieb, insbesondere Kraftfahrzeug-Sitzverstellantrieb**
Linear spindle drive, particularly for adjusting vehicle seats
Mécanisme de réglage à broche linéaire, notamment pour sièges de voiture

(43) Veröffentlichungstag der Anmeldung: 23.07.2003
(73) Patentinhaber: Brose Fahrzeugteile GmbH & Co. KG, Würzburg, 97076 Würzburg (DE)
(72) Erfinder: Zaps, Klaus, 97332 Volkach (DE)
(74) Vertreter: Isarpatent

(56) Entgegenhaltungen:
- EP-A- 1 099 878
- DE-U- 8 814 598
- DE-U- 20 105 871

## Beschreibung

Die Erfindung bezieht sich auf einen Spindel-Verstellantrieb, insbesondere einen Kraftfahrzeug-Sitzverstellantrieb, gemäß Patentanspruch 1.

In der EP 1 099 878 A2 ist eine elektromotorische Verstellanordnung zur Höhenverstellung einer Tischplatte beschrieben, die mit zumindest zwei antreibbaren Spindeln ausgerüstet ist.

In der DE 201 05 871 U1 ist ein elektromotorischer Stelltrieb beschrieben, mit einem Gehäuse und einer Spindel, welche auf beiden Seiten des Gehäuses hervorsteht.

Es sind Kraftfahrzeug-Sitzverstellantriebe mit einem mittels Schneckentrieb betätigbaren einseitigen, an einem Kraftfahrzeugteil abgestützten, Spindeltrieb bekannt, wobei eine Spindelwelle mit einer einteiligen Spindelmuter gepaart ist, die auch als Ankoppelteil für eine Sitzverstellung vorgesehen sein kann.

Gemäß Aufgabe vorliegender Erfindung soll mit einfachen Fertigungs- und Montagemitteln ein gegen axiale Belastungen, insbesondere im Crashfall, besonders widerstandsfähiger Spindel-Verstellantrieb geschaffen werden.

Die Lösung dieser Aufgabe gelingt erfindungsgemäß durch einen linearen Spindel-Verstellantrieb gemäß Patentanspruch 1; vorteilhafte Ausgestaltungen sind jeweils Gegenstand der Unteransprüche.

Der erfindungsgemäße Spindel-Verstellantrieb gewährleistet durch seinen beidendseitigen Spindeltrieb eine höhere Crash-Festigkeit, da die auftretenden Kräfte ausschließlich über die Spindelwelle bzw. die Spindelmuttern aufgefangen und damit von einem Getriebe zwischen der Spindelwelle und einem als Antrieb vorgesehenen Elektromotor ferngehalten werden; zusätzlich ergibt sich eine Verbesserung des Wirkungsgrades, da bei im Betrieb auftretenden hohen axialen Kraftbelastungen von einer geringerer Reibung zwischen Spindelwelle und jeweilige Spindelmutter im Vergleich zu einem nur einendseitigen Spindelantrieb ausgegangen werden kann.

Nach einer Ausgestaltung der Erfindung ist in fertigungstechnisch besonders vorteilhafter Weise zur beidendseitigen Verstellung der jeweiligen Spindelmutter die Spindelwelle an ihrem einen der einen Spindelmutter zugeordneten Ende mit einem Linksgewinde und an ihrem anderen, der anderen Spindelmutter zugeordneten Ende mit einem Rechtsgewinde versehen; der vorteilhaft als Schneckenantrieb, insbesondere unter Verwendung eines an sich bereits vorhandenen Kraftfahrzeug-Fensterheberantriebs ausgebildete Drehantrieb ist über ein mit der Spindelwelle zwischen den Spindelwellen-Enden konzentrisch gehaltertes, insbesondere angespritztes, Antriebsrad, vorzugsweise in Form eines Schneckenrades angekoppelt.

Zur Komfortsteigerung und genauen Einstellbarkeit ist betriebsmäßig eine möglichst spielfreie Führung zwischen der Spindelwelle und der jeweiligen Spindelmutter gewünscht; dieser Forderung kann nach einer Ausgestaltung der Erfindung in fertigungstechnisch besonders einfacher und trotzdem wirksamer Weise entsprochen werden durch eine Zusammensetzung der Spindelmuttern aus jeweils zumindest zwei radial mit Druckauflage auf dem Spindelgewinde der Spindelwelle fügbaren Spindelmutter-Teilen und gemäß einer Ausgestaltung mittels einer Fixierung der gefügten Spindelmutter-Teile durch ein von axial außen aufsteckbares, in seiner Betriebsposition mit den Spindelmutter-Teilen verpressbares, hülsenartiges Halterungs- bzw. Führungsteil; zweckmäßigerweise ist das Halterungs- bzw. Führungsteil für die Spindelmutter gleichzeitig als Verstell-Ankoppelteil für ein entsprechendes Führungsteil des zu verstellenden Gegenstandes, insbesondere eines Kraftfahrzeug-Sitzes, ausgebildet.

Die Erfindung sowie weitere vorteilhafte Ausgestaltungen der Erfindung gemäß Merkmalen der Unteransprüche werden im folgenden anhand von Ausführungsbeispielen der Erfindung in der Zeichnung näher erläutert; darin zeigen:
- FIG 1: einen kompletten motorischen Kraftfahrzeug-Sitzverstellantrieb in einer perspektiven Explosionsdarstellung;
- FIG 2: den Sitzverstellantrieb gemäß FIG 1 in einem Radialschnitt II-II im Endmontagezustand.

Eine Spindelwelle 1;2 mit einem ersten Spindelwellenteil 1 mit z.B. einem Linksgewinde und mit einem zweiten Spindelwellenteil mit z.B. einem Rechtsgewinde ist über ein zwischen den beiden Spindelwellenteilen gehaltertes, insbesondere aus Kunststoff aufgespritztes, Schneckenrad 3 und einer mit dieser kämmenden Schneckenwelle 10.1 eines Drehantriebes 10 antreibbar. Der hier verwendete Drehantrieb 10 in Form eines Kommutatormotors mit einer Schneckenwelle 10.1 entspricht weitgehend einem üblichen Kraftfahrzeug-Fensterheberantrieb und ist statorseitig an der einen Gehäusehälfte 11 eines durch eine weitere Gehäusehälfte 12 komplettierbaren Getriebegehäuses 11,12 fixierbar, das die Spindelwelle 1;2 mit dem Schneckenrad 3 und jeweils eine Spindelmutter 4;5 an dem ersten Spindelwellenteil 1 und eine Spindelmutter 6;7 an dem zweiten Spindelwellenteil 2 axial geführt über jeweils ein hülsenartig umfassendes Halterungs- bzw. Führungsteil 8 bzw.9 aufnimmt.

Das die jeweilige Spindelmutter 6 bzw.7 aufnehmende Halterungs- bzw. Führungsteil 8 bzw.9 ist gleichzeitig mit kundenspezifischen Verstell-Ankoppelteilen 8.1 bzw.9.1 versehen und wird bei Drehantrieb der Spindelwelle 1;2 über die Schneckenwelle 10.1 des motorischen Drehantriebs 10 und das Schneckenrad 3 entsprechend der jeweiligen Steigung des kämmenden Linksgewindes bzw. Rechtsgewindes der ersten bzw. zweiten Spindelwellenteile 1 bzw.2 axial relativ zu dem Getriebegehäuse 11;12 geführt gegenläufig verstellt.

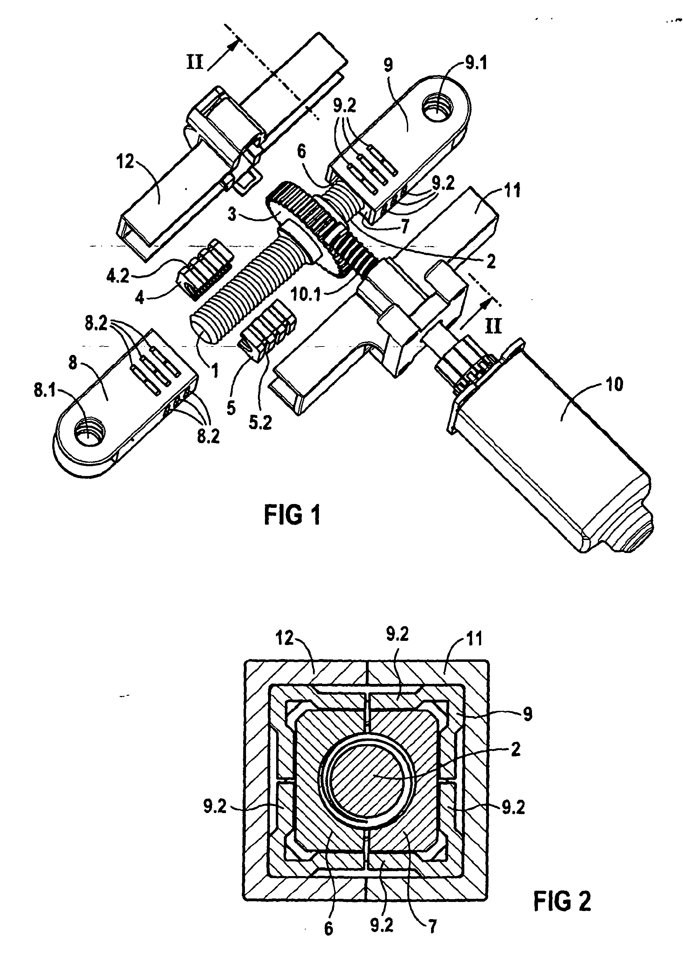

Nach einer vorteilhaften Ausgestaltung der Erfindung sind - wie insbesondere auch durch FIG 2 verdeutlicht - die Spindelmuttern 6 bzw.7 zur Gewährleistung einer spielfreien Führung relativ zu der Spindelwelle 1;2 jeweils aus zwei radial mit Druckauflage auf dem Spindelgewinde fügbaren Spindelmutter-Teilen 4;5 bzw.6;7 fügbar; dazu sind die - vorzugsweise als Biegestanzteile - hülsenartig ausgebildeten Halterungs- bzw. Führungsteile 8 bzw.9 - wie in FIG 1 aus einem Vergleich der Vormontageposition des Halterungs- bzw. Führungsteils 8 mit der Endmontageposition des Halterungs- bzw. Führungsteils 9 ersichtlich - mit den Spindelmutter-Teilen axial zusammengesteckt und die gegenseitigen Endmontagestellungen durch Eindrücken bzw. Nachdrücken von, vorgeformten insbesondere vorgeschnittenen, Fixierungsrippen 8.2 bzw.9.2 der Halterungs- bzw. Führungsteile 8 bzw.9 in korrespondierende Fixierungsnuten 4.2 bzw.5.2 der Spindelmutter-Teile sicherbar.

Wie aus FIG 2 ersichtlich, kommen die radialen Vorderkanten der Spindelmutter-Teile nicht zur gegenseitigen Anlage, so dass eine das jeweilige Toleranzspiel ausgleichende Druckauflage des jeweiligen Innengewindes der Spindelmutter-Teile auf dem jeweiligen Außengewinde der Spindelwelle unter dem - vorteilhaft federnden - Andruck der außen andrückenden Fixierungsrippen der Halterungs- bzw. Führungsteile gewährleistet ist.

Der Hauptteil vorliegender Erfindung kann wie folgt zusammengefasst werden:
Zur Entlastung eines Getriebes zwischen einem, insbesondere motorischen, Drehantrieb 10 und der Spindelwelle 1;2 des Spindel-Verstellantriebes gegenüber überhöhten Axialkräften, insbesondere im Crashfall, ist beidendseitig zu der Spindelwelle 1;2 je eine Spindelmutter 4;5 bzw.6;7 zur Verstell-Ankopplung vorgesehen und der Drehantrieb 10 axial zwischen den Spindelmuttern an die Spindelwelle, insbesondere in Form eines Schneckenantriebes 3;10.1, angekoppelt.

## Patentansprüche

1. Linearer Spindel-Verstellantrieb, insbesondere Kraftfahrzeug-Sitzverstellantrieb;
- mit beidendseitig von einer Spindelwelle (1;2) zumindest je einer axial verstellbaren Spindelmutter (4;5 bzw.6;7) mit jeweiliger Wirkverbindung zu einem Verstell-Ankoppelteil 8.1;9.1;
- mit einer Ankopplung eines, insbesondere motorischen, Drehantriebs (10) für die Spindelwelle (1;2) axial zwischen den beidendseitigen Spindelmuttern (4;5 bzw.6;7),
- mit einer Zusammensetzung der Spindelmuttern (4;5 bzw. 6;7) aus jeweils zumindest zwei radial mit Druckauflage auf dem Spindelgewinde der Spindelwelle (1;2) fügbaren Spindelmutter-Teilen (4;5 bzw.6;7).

2. Linearer Spindel-Verstellantrieb nach Anspruch 1
- mit im Sinne einer zueinander entgegengesetzt gerichteten Verstellbewegung der Spindelmuttern (4;5 bzw.6;7) ausgebildetem Spindelgewinde der Spindelwelle (1;2), insbesondere einem Linksgewinde an einem ersten axialen Spindelwellenteil (1) und einem Rechtsgewinde an einem zweiten axialen Spindelwellenteil (2).

3. Linearer Spindel-Verstellantrieb nach Anspruch 1 und/oder 2
- mit einer Ausbildung des Drehantriebes (10) für die Spindelwelle (1;2) in Form eines Schneckenantriebs (3;10.1) enthaltend eine, insbesondere motorisch angetriebene, Schneckenwelle (10.1) und ein, konzentrisch zu der Spindelwelle (1;2) angeordnetes, mit dieser zwischen den Verstellbereichen der beidendseitigen Spindelmuttern (4;5 bzw.6;7) verbundenes Schneckenrad (3).

4. Linearer Spindel-Verstellantrieb nach Anspruch 3
- mit Verwendung eines Kraftfahrzeug-Fensterheber-Getriebemotorantriebes als Drehantrieb (10) für die Spindelwelle (1;2).

5. Linearer Verstellantrieb nach zumindest einem der Ansprüche 1-4
- mit einer Fixierung der gefügten Spindelmutter-Teile (4;5 bzw.6;7) durch ein von axial aussen, in seiner Betriebsposition mit den Spindelmutter-Teilen (4;5 bzw. 6;7) verpressbares hülsenartiges Halterungs- bzw. Führungsteil (8 bzw.9).

6. Linearer Spindel-Verstellantrieb nach zumindest einem der Ansprüche 1-5
- mit einer Ausbildung des Halterungs- bzw. Führungsteil (8;9) für die Spindelmutter (4;5 bzw.6;7) als jeweiliges Verstell-Ankoppelteil.

7. Linearer Verstellantrieb nach zumindest einem der Ansprüche 1-6
- mit einer Ausbildung des Halterungs- bzw. Führungsteils (8 bzw.9) als die Spindelmutter-Teile (4 bzw.5;6 bzw.7) umfassendes Stanz-Biegeteil.

8. Linearer Verstellantrieb nach Anspruch 6
- mit einer Ausbildung des Halterungs- bzw. Führungsteils (8 bzw.9) als die Spindelmutter-Teile (4 bzw.5;6 bzw.7) umfassendes Spritzgussteil, insbesondere Kunststoff-Spritzgussteil.

9. Linearer Verstellantrieb nach zumindest einem der Ansprüche 1-8
- mit einer Ausbildung des Halterungs- bzw. Führungsteils (8 bzw.9) als kundenspezifisch angepasstes Verstell-Ankoppelteil.

## Claims

1. Linear spindle adjustment drive, in particular a motor vehicle seat adjustment drive;
- having, on both sides of a spindle shaft (1; 2), in each case at least one axially adjustable spindle nut (4; 5, 6; 7) with a respective operative connection to an adjustment coupling part 8.1; 9.1;
- with an axial coupling of an in particular motor-driven rotary drive (10) for the spindle shaft (1; 2) between the spindle nuts (4; 5, 6; 7) on both sides,
- with an assembly of the spindle nuts (4; 5, 6; 7) composed in each case of at least two spindle nut parts (4; 5, 6; 7) which can be joined radially with a pressure support on the spindle thread of the spindle shaft (1; 2).

2. Linear spindle adjustment drive as claimed in claim 1, with a spindle thread of the spindle shaft (1; 2) formed in terms of a mutually oppositely directed adjustment movement of the spindle nuts (4; 5, 6; 7), in particular a left-hand thread on a first axial spindle shaft part (1) and a right-hand thread on a second axial spindle shaft part (2).

3. Linear spindle adjustment drive as claimed in claim 1 and/or 2, with a design of the rotary drive (10) for the spindle shaft (1;2) in the form of a worm drive (3; 10.1) containing an in particular motor-driven worm shaft (10.1) and a worm wheel (3) which is disposed concentrically with respect to the spindle shaft (1; 2) and is connected thereto between the adjustment regions of the spindle nuts (4; 5, 6; 7) on both sides.

4. Linear spindle adjustment drive as claimed in claim 3, with the use of a motor vehicle window lifter gear motor drive as a rotary drive (10) for the spindle shaft (1; 2).

5. Linear adjustment drive as claimed in at least one of claims 1-4, with an attachment of the joined spindle nut parts (4; 5, 6; 7) by means of a sleeve-like holding or guiding part (8, 9) which can be pressed axially from outside in its operating position with the spindle nut parts (4; 5, 6;7).

6. Linear spindle adjustment drive as claimed in at least one of claims 1-5, with a design of the holding or guiding part (8; 9) for the spindle nut (4; 5, 6; 7) as a respective adjustment coupling part.

7. Linear adjustment drive as claimed in at least one of claims 1-6, with a design of the holding or guiding part (8; 9) as a punched-bent part which comprises the spindle nut parts (4, 5; 6, 7).

8. Linear adjustment drive as claimed in claim 6, with a design of the holding and guiding part (8, 9) as an injection-moulded part, in particular a synthetic material injection-moulded part which comprises the spindle nut parts (4, 5; 6, 7).

9. Linear adjustment drive as claimed in at least one of claims 1-8, with a design of the holding or guiding part (8, 9) as a customised adjustment coupling part.

## Revendications

1. Mécanisme de réglage à broche linéaire, notamment pour sièges de voiture ;
- avec aux deux extrémités d'un arbre de broche (1 ; 2) au moins un écrou de broche (4 ;5 ou 6 ;7) réglable axialement avec une liaison active respective par rapport à un élément de couplage et d'ajustage 8.1 ; 9.1 ;
- avec un couplage d'un entraînement en rotation (10) en particulier par moteur pour l'arbre de broche (1 ; 2) axialement entre les écrous de broche (4 ; 5 ou 6 ; 7) aux deux extrémités,
- avec des écrous de broche (4 ; 5 ou 6 ;7) composés respectivement d'au moins deux éléments d'écrou de broche (4 ; 5 ou 6 ; 7) pouvant être asssemblés radialement en appuyant sur le filetage de broche de l'arbre de broche (1 ; 2).

2. Mécanisme de réglage à broche linéaire selon la revendication 1 avec un filetage de broche de l'arbre de broche (1 ; 2) formé dans le sens d'un mouvement des écrous de broche (4 ; 5 ou 6 ; 7) orienté de manière mutuellement opposée, en particulier avec un filet à gauche au niveau d'une première partie d'arbre de broche (1) axiale et un filet à droite au niveau d'une seconde partie d'arbre de broche (2) axiale.

3. Mécanisme de réglage à broche linéaire selon la revendication 1 ou 2 avec une formation de l'entraînement en rotation (10) pour l'arbre de broche (1 ; 2) sous la forme d'un entraînement de vis sans fin (3 ; 10.1) comprenant une vis sans fin (10.1) entraînée en rotation en particulier par moteur, et une roue à engrenage hélicoïdal (3) disposée de manière concentrique par rapport à l'arbre de broche (1 ; 2), avec celui-ci entre les écrous de broche (4 ; 5 ou 6 ; 7) aux deux extrémités.

4. Mécanisme de réglage à broche linéaire selon la revendication 3 avec l'utilisation d'un motoréducteur d'entraînement d'un lève-vitre de véhicule automobile faisant office de système d'entraînement en rotation (10) pour l'arbre de broche (1 ; 2).

5. Mécanisme de réglage linéaire selon au moins l'une des revendications 1 à 4 avec une fixation des éléments d'écrou de broche (4 ; 5 ou 6 ; 7) assemblés par un élément de support ou de guidage (8 ou 9) en forme de gaine pouvant être comprimé axialement depuis l'extérieur dans sa position de service avec les éléments d'écrou de broche (4 ; 5 ou 6 ; 7).

6. Mécanisme de réglage à broche linéaire selon au moins l'une des revendications 1 à 5 avec une formation de l'élément de support ou de guidage (8 ; 9) pour l'écrou de broche (4 ; 5 ou 6 ; 7) comme élément de couplage et d'ajustage respectif.

7. Mécanisme de réglage linéaire selon au moins l'une des revendications 1 à 6 avec une formation de l'élément de support ou de guidage (8 ou 9) faisant office de pièce estampée et courbée comprenant les éléments d'écrou de broche (4 ou 5 ; 6 ou 7).

8. Mécanisme de réglage à broche linéaire selon la revendication 6 avec une formation de l'élément de support ou de guidage (8 ou 9) faisant office d'élément de moulage par injection, en particulier un élément de moulage par injection en matière plastique comprenant les éléments d'écrou de broche (4 ou 5 ; 6 ou 7).

9. Mécanisme de réglage linéaire selon au moins l'une des revendications 1 à 8 avec une formation de l'élément de support ou de guidage (8 ou 9) faisant office d'élément de couplage et d'ajustage adapté aux besoins du client.
